# EUROPÄISCHE PATENTANMELDUNG

(11) **EP 0 846 934 A1**
(43) Veröffentlichungstag der Anmeldung: **10.06.1998**
(21) Anmeldenummer: 97121004.2
(22) Anmeldetag: 29.11.1997
(51) Int. Cl.: G01F 1/00, G01F 23/296, G01F 1/66

(54) **Messvorrichtung zur Erfassung der Durchflussmenge**

(30) Priorität: 06.12.1996 DE 19650621
(71) Anmelder: Heim, Wilhelm, 75210 Keltern-Weiler (DE)
(72) Erfinder: Heim, Wilhelm, 75210 Keltern-Weiler (DE)
(74) Vertreter: Frank, Gerhard, Dipl.-Phys.

(57) **Zusammenfassung**

Eine Meßvorrichtung zur Erfassung der Durchflußmenge eines strömenden Mediums in einer Leitung, insbesondere von Abwässern in Abwasserkanälen, besitzt Sensoren zur Erfassung der Fließgeschwindigkeit und der Fließhöhe, die in einem Schwimmkörper untergebracht sind, der auf der Oberfläche des strömenden Mediums stationär gehalten ist.

Anstelle der bisher praktizierten, mechanisch starren Fixierung einer solchen Meßvorrichtung auf dem Boden des Kanals oder der Rinne wird die die erfindungsgemäße Schwimmeranordnung an einem Halteseil befestigt, das sie auf der Oberfläche des zu messenden strömenden Mediums hält. Dadurch ist auch eine zeitweise Verwendung einer solchen Meßvorrichtung an wechselnden Einsatzorten problemlos möglich, da die erfindungsgemäße Meßvorrichtung einfacher zu installieren und zu demontieren ist; im übrigen ist die Verschmutzungsgefahr wesentlich reduziert und insgesamt der mechanische und damit finanzielle Aufwand geringer als bei den bekannten stationären Meßvorrichtungen.

## Beschreibung

### Gebiet der Erfindung

Die Erfindung betrifft das Gebiet der Messung der Durchflußmenge eines strömenden Mediums.

Das spezielle Anwendungsgebiet der Erfindung ist die Abwassertechnik, wo mit Hilfe Von Sensoren die Fließgeschwindigkeit und die Fließhöhe von Abwässern in teilgefüllten Abwasserkanälen erfaßt werden soll. Dies ist beispielsweise erforderlich, um Funktionsparameter einer Kläranlage zu erfassen oder zu steuern.

### Stand der Technik

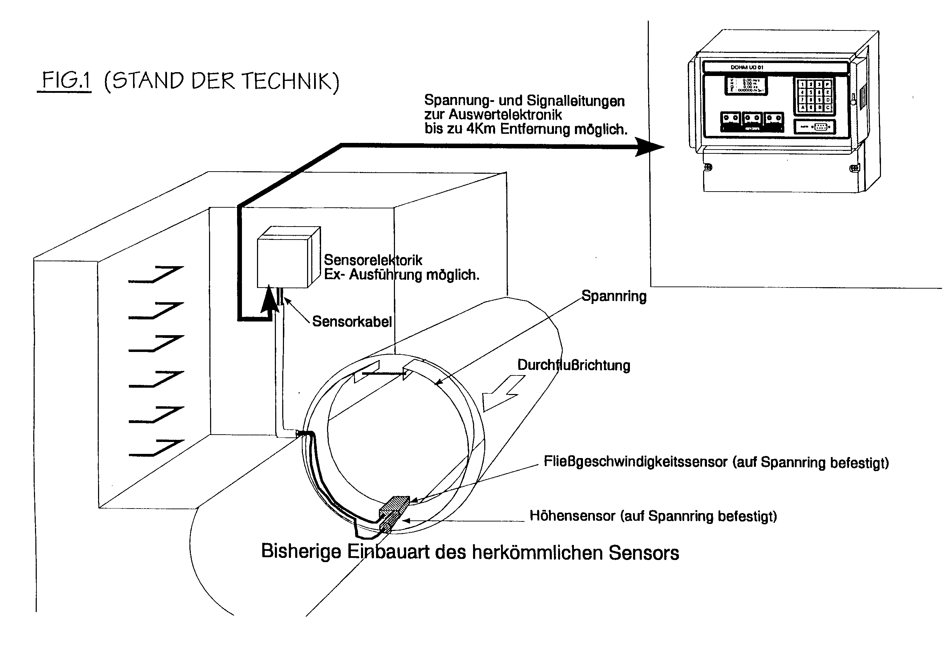

Die Messung der Durchflußmenge wird allgemein durch Messung der zwei Einzelparameter "Fließgeschwindigkeit" und "Fließhöhe" durchgeführt, wozu beispielsweise Druckmeßsonden oder Echolotanordnungen verwendet werden. In Abhängigkeit vom Querschnitt des Abwasserkanals wird aus diesen Meßparametern dann in einfacher Weise nach der Durchflußformel die Durchflußmenge errechnet. Figur 1 zeigt eine bekannte Lösung zur Realisierung dieser Messung, bei der am Boden des Kanals ein Sensor zur Erfassung der Fließgeschwindigkeit und ein Sensor zur Erfassung der Abwasserhöhe befestigt sind, aus deren Signalen dann in einer Sensorelektronik, wie genannt, die Durchflußmenge berechnet und an ein in der Regel externes Auswertegerät gegeben wird.

Aus dem Lehrbuch O. Fiedler "Strömungs- und Durchflußmeßtechnik", R. Oldenbourg Verlag München Wien 1992, Seiten 266-284 ist eine prinzipiell gleichartige Lösung für Durchflußmessungen bekannt: Zur Geschwindigkeitsmessung dient eine "stabgeführte Doppler-Meßsonde" (Bild 6.35), zur Höhenstandsmessung dient ein "Ultraschall-Abstandsgeber" (Bild 6.37). Bei offenen Kanälen kann auch eine Anordnung nach Bild 6.36 in Frage kommen, bei der als Geschwindigkeitsmesser eine Platte auf dem Kanalboden und als Höhengeber ein Ultraschall-Abstandsdetektor dient, der ortsfest über dem strömenden Medium gehalten ist.

Gemeinsam ist allen Lösungsvorschlägen, daß Strömungsgeschwindigkeit und Oberflächenhöhe des Mediums mit separaten Meßeinrichtungen erfaßt werden, die je nach konkretem Anwendungsbereich und Platzverhältnissen positioniert und aufeinander abgestimmt werden müssen.

Nachteilig bei diesen Lösungen nach dem Stand der Technik ist insbesondere die umständliche Fixierung von Sensoren auf dem Boden der Kanalleitung (im Beispiel der Figur 1 mittels eines Spannringes dargestellt), die entsprechend kostenaufwendig ist, sowie die zunehmende Funktionserschwerung mit entsprechenden Fehlmessungen aufgrund von Schmutzablagerungen und Schmutzzusetzungen infolge des sich in den tieferen Bereichen des Kanals vorzugsweise bewegenden dichteren oder festeren Gutes, wie z.B. Fäkalien oder sonstigem Klärgut.

### Darstellung der Erfindung

Es ist Aufgabe der Erfindung, eine Meßvorrichtung der gattungsbildenden Art so weiterzubilden, daß sie einfacher zu installieren und zu demontieren ist, die Verschmutzungsgefahr wesentlich reduziert ist und der mechanische und damit finanzielle Aufwand wesentlich reduziert wird, so daß insbesondere auch kurzzeitige Einzelmessungen wirtschaftlich durchführbar werden.

Erfindungsgemäß wird diese Aufgabe gemäß dem kennzeichnenden Teil des Patentanspruchs 1 gelöst.

Der Grundgedanke der Erfindung besteht daher darin, anstelle separater Meßeinrichtungen für Strömungsgeschwindigkeit und Höhe und der dabei erforderlichen mechanischen Fixierung der Strömungsmeßeinrichtung auf dem Kanalboden eine stationäre Halterung auf der Oberfläche des strömenden Abwassers vorzusehen, wozu die in an sich bekannter Technik ausgeführten Sensoren in einem strömungstechnisch optimierten Schwimmkörper untergebracht sind.

Als erste und zweite Sensoranordnungen können handelsübliche Vorrichtungen eingesetzt werden, auch eine Auswerteschaltung kann in diesem Schwimmkörper untergebracht sein, deren Signal über ein Kabel nach außen zu geeigneten Einrichtungen abgebbar ist, das gleichzeitig als Halteseil des Schwimmkörpers in der Strömung des Mediums dient.

Diese Ausgestaltungen ermöglichen eine sehr kompakte Anordnung, in der alle wesentlichen Meß- und Auswertekomponenten beispielsweise in integrierter Technik enthalten sind, so daß die Montage der Meßvorrichtung einfach dadurch erfolgen kann, daß diese in den Kanal gelegt und das Halteseil befestigt wird, und danach die elektrische Verbindung zu einem externen Anzeige- oder Auswertegerät hergestellt wird. Ebenso einfach ist die Demontage der erfindungsgemäßen Meßvorrichtung, so daß auch eine zeitweise Verwendung einer solchen Meßvorrichtung (beispielsweise nach Inbetriebnahme eines Klärwerkes) an wechselnden Einsatzorten problemlos möglich ist, einem Einsatzbereich, der der eingangs geschilderten Methode nach dem Stand der Technik kaum offen steht.

Weitere vorteilhafte Ausgestaltungen sind weiteren Unteransprüchen zu entnehmen.

### Kurze Beschreibung der Zeichnungen

Ein bevorzugtes Ausführungsbeispiel der erfindungsgemäßen Meßvorrichtung wird nun anhand von Zeichnungen näher erläutert, es zeigen:
- Figur 1:: Eine schematische Perspektivansicht des Einbaus von zwei Sensoranordnungen gemäß dem Stand der Technik,
- Figur 2:: eine perspektivische Gesamtansicht der erfindungsgemäßen Meßvorrichtung mit einer schematischen Darstellung des Meßprinzips,

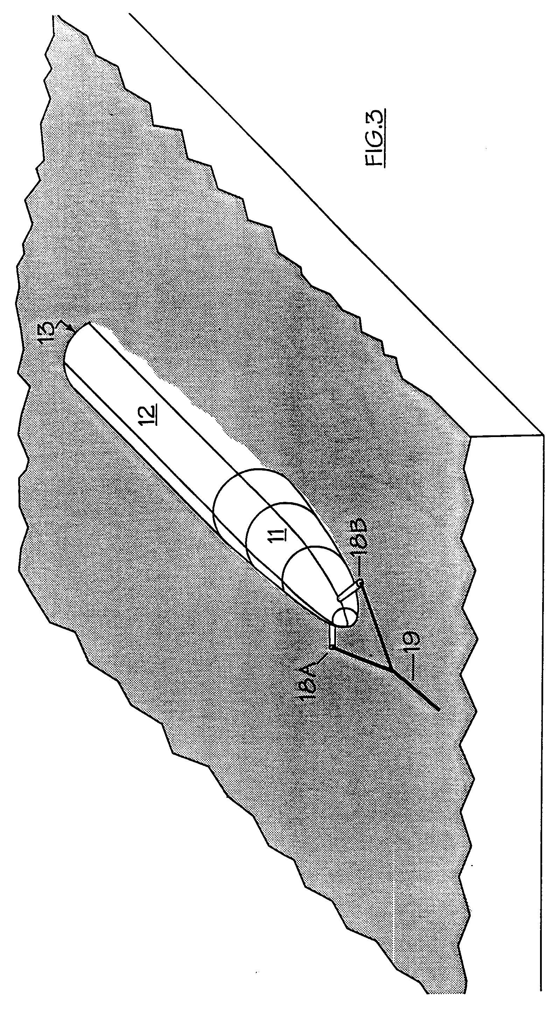

- Figur 3:: eine perspektivische Detailaufsicht auf die Meßvorrichtung gemäß Figur 2,
- Figur 4:: eine perspektivische Explosions-Darstellung der Meßvorrichtung mit den wesentlichen Komponenten zur Meßwerterfassung und Meßwertverarbeitung, und

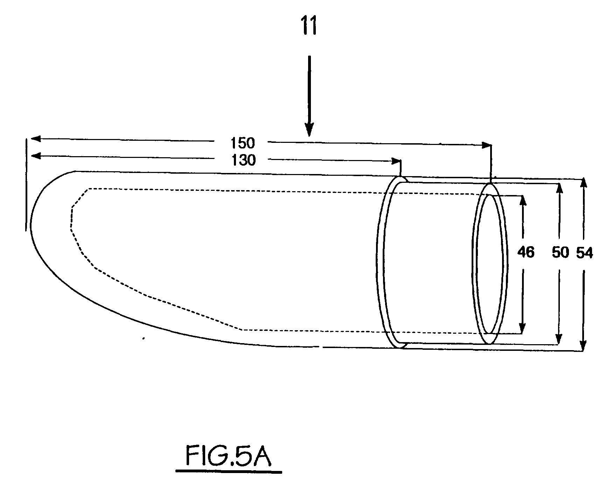

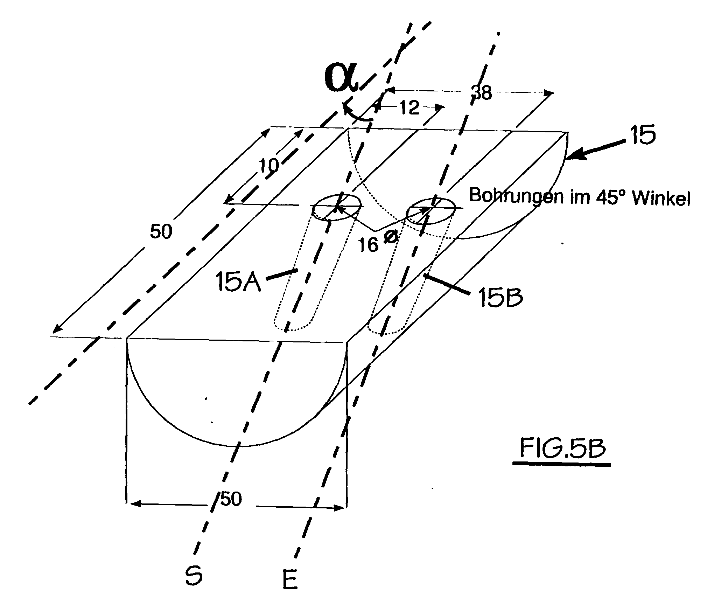

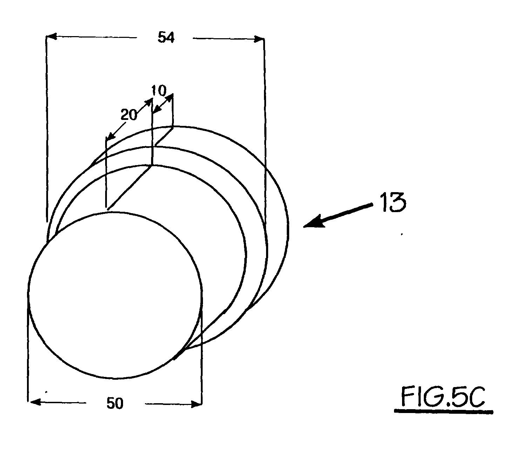

- Figuren 5A...5C:: die drei Bauteile des Schwimmkörpers in Einzeldarstellungen mit Beispielen für die praktische Bemaßung.

### Beschreibung des bevorzugten Ausführungsbeispiels

Die Meßvorrichtung besteht aus einem strömungsgünstig geformten Schwimmkörper 10, der seinerseits aus einer Spitze 11, einem zylindrischen Mittelteil 12 und einer rückseitigen Verschlußkappe 13 gebildet ist, die jeweils zusammengesteckt oder miteinander verschraubt sein können.

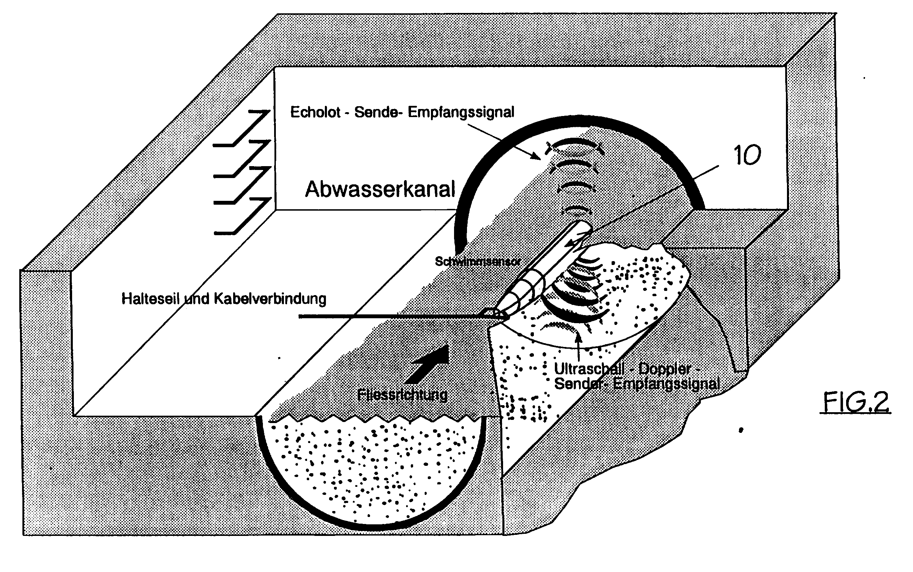

Die Funktion der Spitze 11 besteht im wesentlichen zunächst in einer strömungstechnischen Anpassung des Schwimmkörpers 10 an das entgegenströmende Medium derart, daß eine weitgehende Stabilisierung des Schwimmkörpers erreicht wird, der eine zuverlässige Messung mittels der Sensoranordnungen ermöglicht. Hierzu weist die Spitze 11 eine Halterung 18 auf, die aus zwei beidseitig schräg nach vorne zeigenden Gabelarmen 18A,18B besteht, an deren jeweiligen Enden die beiden Endabschnitte eines Kabels 19 befestigt ist, das dann beispielsweise an einem leicht zugänglichen Punkt oberhalb des Kanals befestigt wird, so daß sich die in Figur 2 dargestellte Situation ergibt.

Im zylindrischen Mittelteil 12 befindet sich ein halbzylindrischer Aufnehmer 15, in den die erste Sensoranordnung zur Erfassung der Fließgeschwindigkeit, bestehend aus einem Sendermeßkopf 21 und einem Empfängermeßkopf 22 gehalten ist. Diese beiden Meßköpfe 21 und 22 sind in geneigten Kanälen 15A,15B des Aufnehmers so gehalten, daß ihre Senderachse S und ihre Empfangsachse E parallel zueinander, aber um einen Winkel α von etwa 45° gegenüber der Flüssigkeitsoberfläche geneigt sind. Über ein Ultraschall-Dopplersignal dieser ersten Sensoranordnung läßt sich die Fließgeschwindigkeit des Mediums unterhalb des Schwimmkörpers 10 erfassen.

Die zweite Sensoranordnung dient zur Erfassung der Fließhöhe und besteht aus einem Echolot-Sender/Empfänger 22, der im zylindrischen Mittelteil 12 so gehalten ist, daß seine Sende- bzw. Empfangsachse N im wesentlichen senkrecht von der Oberfläche des Mediums nach oben zur Decke des Kanals 40 verläuft, so daß hiermit direkt der Abstand der Oberfläche des strömenden Mediums zur Kanaldecke und damit indirekt auch der Füllgrad des Kanals bestimmbar ist. Auf einer Aufnahmeebene des schlittenartigen Aufnehmers 15 befindet sich die Auswerteschaltung in Form einer Platine 50, die die Meßsignale der beiden Sensoranordnungen zugeführt bekommt, und gemäß der bekannten Durchflußformel aus den Meßwerten für die Strömungsgeschwindigkeit einerseits und der Füllhöhe andererseits die Durchflußmenge des Mediums, beispielsweise des Abwassers bestimmt. Über eine nicht dargestellte Leitung ist die Platine 50 dann durch das Innere des Schwimmkörpers hindurch mit dem Kabel 19 verbunden, so daß am externen Halterungspunkt des Schwimmkörpers 10 auch bereits das "fertige" Signal abgreifbar ist, das unmittelbar die interessierende Durchflußmenge angibt und somit gegebenenfalls auch von mobilen Auswertegeräten einfach erfaßt werden kann.

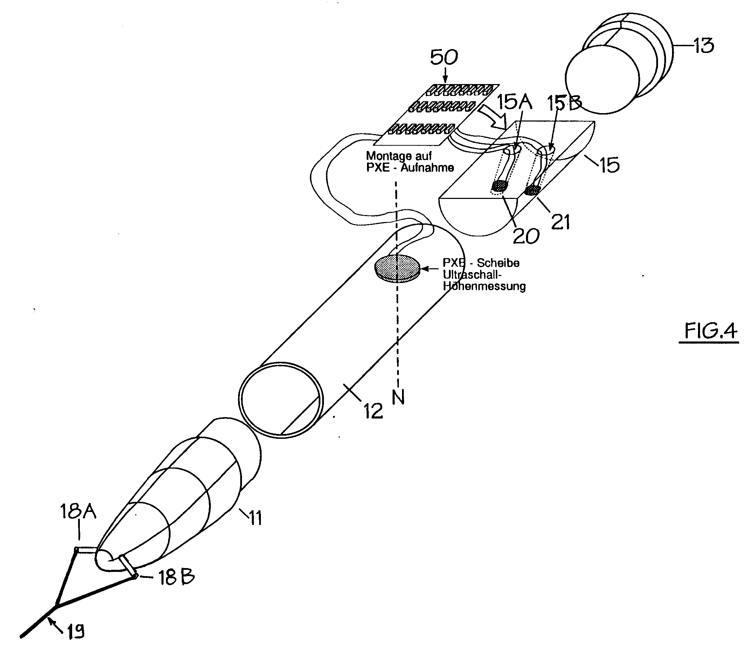

Insbesondere aus der Explosionsdarstellung der Figur 4 ist auch die leichte Montage und Demontage des Schwimmkörpers ersichtlich, was insbesondere auch den einfachen Austausch oder Ersatz einzelner Sensorkomponenten ermöglicht. Die Bauteile werden einfach zusammengesteckt und das die Sensoranordnungen und die Auswerteschaltung aufnehmende schlittenartige Aufnahmeteil 15 ist dann innerhalb des zylindrischen Mittelteils 12 gehalten, beidseitig begrenzt von der aufgesteckten Spitze einerseits und der rückseitigen Verschlußkappe 13 andererseits.

## Patentansprüche

1. Meßvorrichtung zur Erfassung der Durchflußmenge eines strömenden Mediums in einer Leitung, insbesondere von Abwässern in Abwasserkanälen, mit Hilfe einer ersten Sensoranordnung zur Erfassung der Fließgeschwindigkeit, die im strömenden Medium stationär gehalten ist und mit einer zweiten Sensoranordnung zur Erfassung der Fließhöhe,
dadurch gekennzeichnet, daß die erste und die zweite Sensoranordnung in einem Schwimmkörper (10) angeordnet sind, der auf der Oberfläche des Mediums gehalten ist.

2. Meßvorrichtung nach Anspruch 1, dadurch gekennzeichnet, daß die erste Sensoranordnung zur Erfassung der Fließgeschwindigkeit aus einem Sender- (21) und einem Empfängermeßkopf (22) besteht, die im Schwimmkörper (10) so angeordnet sind, daß ihre Sende- (S) bzw. Empfangsachse (E) innerhalb des Mediums verlaufen und mit der Oberfläche des Mediums einen spitzen Winkel (α) von vorzugsweise 45° bilden.

3. Meßvorrichtung nach Anspruch 1, dadurch gekennzeichnet, daß die zweite Sensoranordnung zur Erfassung der Fließhöhe einen Echolot-Sender/Empfänger (22) beinhaltet, der im Schwimmkörper (10) so angeordnet ist, daß seine Sende- bzw. Empfangsachse (N) im wesentlichen senkrecht von der Oberfläche des Mediums nach oben zur Decke der Leitung (40) verläuft.

4. Meßvorrichtung nach Anspruch 2 und 3, dadurch gekennzeichnet, daß die Sensoranordnungen Teil einer Auswerteschaltung sind, in der aus den Meßwerten der Fließgeschwindigkeit und der Fließhöhe unter Verwendung der Querschnittsform der Leitung die Durchflußmenge berechnet wird.

5. Meßvorrichtung nach Anspruch 1 und 4, dadurch gekennzeichnet, daß die Meßwerte der Durchflußmenge kontinuierlich oder auf externe Abfrage über das Kabel (19) ausgebbar sind, das gleichzeitig als Halteseil des Schwimmkörpers (10) in der Strömung des Mediums dient.

6. Meßvorrichtung nach Anspruch 1, dadurch gekennzeichnet, daß der Schwimmkörper (10) im wesentlichen zylindrisch geformt ist, mit einem kufenähnlich zur Spitze (11) zulaufenden Querschnitt.

7. Meßvorrichtung nach Anspruch 5 und 6, dadurch gekennzeichnet, daß das Kabel (19) zur Meßwertübertragung in einer gabelförmigen Halterung (18) im Bereich der Spitze (11) des Schwimmkörpers (10) oberhalb der Oberfläche des Mediums in den Schwimmkörper (10) eingeführt ist.

8. Meßvorrichtung nach Anspruch 5 bis 7, dadurch gekennzeichnet, daß die Formgebung insbesondere der Spitze (11) des Schwimmkörpers (10) und der Anordnung der Halterung (18) so aufeinander abgestimmt sind, daß die Lage des Schwimmkörpers (10) und damit der Sensoranordnungen derart stabilisiert werden, daß die Ebene der Gabelarme (18A,18B) parallel zur Oberfläche des Mediums gehalten und gegebenenfalls rückgeführt werden.

9. Meßvorrichtung nach Anspruch 6, dadurch gekennzeichnet, daß der Schwimmkörper (10) aus einem zylindrischen Mittelteil (12) zur Aufnahme der Sensoranordnungen und der Auswerteschaltung in Form einer Platine (50) mit der Prozessor-Elektronik einer steck- oder schraubbaren, einer rückseitigen Verschlußkappe (13) und der steck- oder rastbaren Spitze (11) mit der Halterung (18) gebildet ist.

10. Meßvorrichtung nach Anspruch 2 und 9, dadurch gekennzeichnet, daß Sender- und Empfängermeßkopf (20,21) aus je einer PXE-Scheibe bestehen, die in geneigten Kanälen (15A,15B) eines schlittenartigen Aufnehmers (15) gehalten sind, der in das Mittelteil (12) des Schwimmkörpers (10) einschiebbar ist, und der die Platine (50) trägt.

11. Meßvorrichtung nach Anspruch 3, dadurch gekennzeichnet, daß Echolot-Sender-Empfänger (22) aus einer PXE-Scheibe besteht, deren Ebene parallel zur Oberfläche des Mediums verläuft.
